# EUROPÄISCHE PATENTSCHRIFT

(11) **EP 1 226 642 B1**
(45) Veröffentlichungstag und Bekanntmachung des Hinweises auf die Patenterteilung: **01.03.2006**
(21) Anmeldenummer: 00974470.7
(22) Anmeldetag: 27.10.2000
(51) Int. Cl.: H02J 1/14, B60R 16/02

(54) **VORRICHTUNG ZUR SPANNUNGSVERSORGUNG IN EINEM KRAFTFAHRZEUG**
DEVICE FOR SUPPLYING ELECTRICITY TO A VEHICLE
DISPOSITIF D'ALIMENTATION EN TENSION DANS UN VEHICULE

(30) Priorität: 06.11.1999 DE 19953373
(43) Veröffentlichungstag der Anmeldung: 31.07.2002
(73) Patentinhaber: AUDI AG, 85045 Ingolstadt (DE)
(72) Erfinder: WINKLER, Josef, 85110 Kipfenberg (DE); SEITZ, Günther, 85092 Kösching (DE); KREIPP, Alfons-Martin, 85055 Ingolstadt (DE); HAFKEMEYER, Marcus, 85049 Ingolstadt (DE); WOLF, Norbert, 85055 Ingolstadt (DE)
(74) Vertreter: Thielmann, Frank
(86) Internationale Anmeldenummer: PCT/EP2000/010610
(87) Internationale Veröffentlichungsnummer: WO 2001/035508

(56) Entgegenhaltungen:
- EP-A- 0 884 819
- DE-A- 4 445 647

## Beschreibung

Die vorliegende Erfindung betrifft eine Vorrichtung zur Spannungsversorgung in einem Kraftfahrzeug nach dem Oberbegriff von Patentanspruch 1.

Eine derartige Vorrichtung ist bekannt aus der DE 44 45 647.

In Kraftfahrzeugen ist es üblicherweise so, dass von einer Fahrzeugbatterie eine bestimmte Spannung bereitgestellt wird, manche Verbraucher jedoch eine höhere, andere Verbraucher eine niedrigere Spannung als die von der Fahrzeugbatterie bereitgestellte Spannung zu ihrem Betrieb benötigen. Beispielsweise verlangen zu ihrem Betrieb leistungsintensive Einrichtungen wie die Frontscheibenheizung oder ein Kühlerlüfter bei Maximaldrehzahl, eine höhere als die von der Fahrzeugbatterie bereitgestellte Spannung, während andere Bauelemente wie ein Kühlerlüfter bei geringer Drehzahl, zu ihrem Betrieb einer Spannung bedürfen, die unter dem von der Fahrzeugbatterie bereitgestellten Wert liegt. DC/DC-Wandler umfassen gewöhnlich eine Induktivität, die im wesentlichen die Größe eines DC/DC-Wandlers und damit des von ihm beanspruchten Platzes bestimmt. In Anbetracht des in einem Kraftfahrzeug zur Verfügung stehenden Raumes ist es deshalb erwünscht, die Anzahl der verwendeten DC/DC-Wandler gering bzw. die Größe der vorhandenen DC/DC-Wandler klein zu halten. Im Stand der Technik werden daher mehrere, die gleiche Spannung zum ihrem Betrieb benötigende Verbraucher an einen gemeinsamen DC/DC-Wandler angeschlossen.

Die erwähnte DE 44 45 647 befasst sich mit der Problematik, eine Entladung der Fahrzeugbatterie zu verhindern, wenn zu viele Verbraucher gleichzeitig in Betrieb sind. Hierzu wird der Auslastungsgrad des Generators des Kraftfahrzeugs bestimmt und zur Regelung der Ausgangsspannung eines DC/DC-Wandlers verwendet.

Aus der WO 98/02333 ist bekannt durch Umschaltmaßnahmen von start- und ersatzbetriebsrelevanten Komponenten einen startbedingten Spannungseinbruch zu verhindern. Es wird vorgeschlagen, bei einem Zwei-Batterien-Netz alle Verbraucher mit Ausnahme des Starters an eine separate Batterie anzuschließen, während dem Starter, zumindest während des Startvorgangs, eine eigene Batterie zur Verfügung gestellt wird. Hierdurch lässt sich ein interner Spannungseinbruch während des Startvorgangs vermeiden.

Für die Versorgung von Verbrauchern mit Strom ist im Falle der DE 44 45 647 der Drehstromgenerator, im Falle der WO 98/02333 die Fahrzeugbatterie das begrenzende Element.

Der vorliegenden Erfindung liegt deshalb die Aufgabe zugrunde, eine gattungsgemäße Vorrichtung zur Spannungsversorgung in einem Kraftfahrzeug derart weiterzubilden, dass die Anzahl der in einem Kraftfahrzeug verwendeten DC/DC-Wandler niedriger und/oder die Größe der vorhandenen DC/DC-Wandler kleiner gewählt werden kann als dies aus dem Stand der Technik bekannt ist.

Diese Aufgabe wird gelöst durch eine Vorrichtung zur Spannungsversorgung in einem Kraftfahrzeug mit den Merkmalen von Patentanspruch 1.

Die Erfindung macht sich den Umstand zunutze, dass es Verbraucher gibt, die aufgrund ihrer verbraucherspezifischen Eigenschaften nie gleichzeitig betrieben werden müssen. Deshalb ist es möglich, den DC/DC-Wandler auf die Abgabe eines geringeren Maximalstroms - als aus dem Stand der Technik bekannt - zu dimensionieren. Dies resultiert in einer kleineren Induktivität und damit in einer kleineren Bauart des DC/DC-Wandlers. Andererseits können mehrere Geräte von einem DC/DC-Wandler versorgt werden, die wie im Stand der Technik von separaten DC/DC-Wandlem betrieben wurden. Mit dem reduzierten Platzbedarf geht eine Reduktion der Kosten einher.

Bei einer besonders vorteilhaften Ausführungsform ist der DC/DC-Wandler derart ausgebildet, dass die an seinem Ausgang bereitstellbare Spannung variierbar ist. Daher kann ein und derselbe DC/DC-Wandler beispielsweise zwei Verbraucher, deren gleichzeitiger Betrieb aufgrund ihrer spezifischen Eigenschaften nie erforderlich ist, mit Strom versorgen, wobei beide Verbraucher zu ihrem Betrieb unterschiedliche Spannungen benötigen. Zu diesem Zwecke kann der DC/DC-Wandler über mindestens einen Steuereingang verfügen, der die Einstellung der gewünschten Spannung am Ausgang des DC/DC-Wandlers ermöglicht.

Das Steuersignal kann direkt oder indirekt von einem ankoppelbaren, insbesondere einem angekoppelten Verbraucher stammen, wobei dies die Möglichkeit einschließt, die Steuerung von einem Motorsteuergerät vornehmen zu lassen, das die interessierenden Signale aller Verbraucher "kennt" und über deren aktuellen Ein- und Auszustand bzw. einen demnächst stattfindenden Ein-/Ausschaltvorgang "informiert" ist.

Zusätzlich zu der eben erwähnten Möglichkeit oder als eigenes Merkmal, insbesondere wenn die angeschlossenen Verbraucher eine identische Versorgungsspannung benötigen, kann dem DC/DC-Wandler ein Steuersignal zugeführt werden, das den Auslastungsgrad der den DC/DC-Wandler speisenden Gleichspannungsquelle, insbesondere des Drehstromgenerators des Kraftfahrzeugs, berücksichtigt: Geht der Auslastungsgrad in einen kritischen Bereich, wird ein Steuersignal erzeugt und an den DC/DC-Wandler gekoppelt, mit dem die Ausgangsspannung des DC/DC-Wandlers abgesenkt wird.

Am Ausgang des DCIDC-Wandlers kann eine höhere oder eine niedrigere Spannung bereitgestellt werden als an seinem Eingang. Die mindestens zwei Verbraucher, deren simultaner Betrieb nicht nötig ist, können sich hinsichtlich ihrer Priorität unterscheiden. Beispielsweise kann der Verbraucher mit der niedrigeren Priorität ein Konsumverbraucher sein, während der Verbraucher mit der höheren Priorität ein sicherheitsrelevanter Verbraucher ist. Bei einem anderen Beispiel kann der erste Verbraucher erfahrungsgemäß in einem ersten Temperaturbereich und der zweite Verbraucher in einem zweiten Temperaturbereich mit Spannung versorgt werden müssen, wobei sich erster und zweiter Temperaturbereich nicht überlappen. Beispielhaft sei erwähnt die Frontscheibenheizung, die gewöhnlich bei Temperaturen < 0 ° C betrieben wird, und der Kühlerlüftermotor, dessen Maximalleistung erfahrungsgemäß nur in einem Temperaturbereich > 0 ° C gefordert wird.

Weitere vorteilhafte Weiterbildungen der Erfindung sind in den Unteransprüchen definiert.

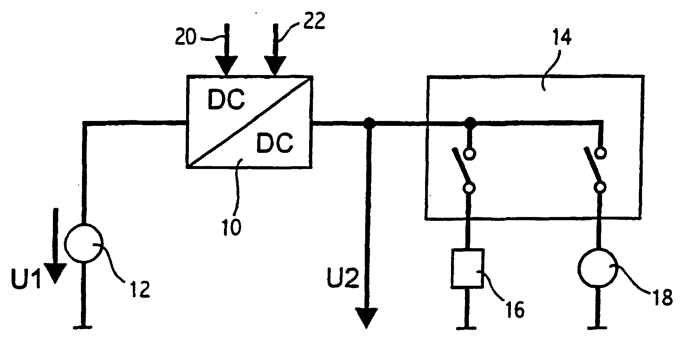

Ein Ausführungsbeispiel wird im folgenden unter Hinweis auf die beigefügte Zeichnung näher beschrieben, die in schematischer Darstellung eine erfindungsgemäße Vorrichtung zeigt.

Gezeigt wird eine erfindungsgemäße Vorrichtung zur Spannungsversorgung in einem Kraftfahrzeug mit einem DC/DC-Wandler 10, der eingangsseitig an eine Gleichspannungsquelle 12, insbesondere eine Fahrzeugbatterie oder einen Drehstromgenerator, angeschlossen ist, die eine Spannung U1 bereitstellt. Der DC/DC-Wandler 10 stellt an seinem Ausgang eine Spannung U2 bereit. Der Ausgang des DC/DC-Wandlers 10 ist über eine Auswählvorrichtung 14 mit einem ersten elektrischen Verbraucher 16 und einem zweiten elektrischen Verbraucher 18 verbindbar. Bei dem ersten elektrischen Verbraucher 16 kann es sich beispielsweise um die Frontscheibenheizung eines Kraftfahrzeugs handeln, während der zweite elektrische Verbraucher 18 ein Kühlerlüftermotor sein kann. In dem dargestellten Ausführungsbeispiel ist die Spannung U2 größer als die Spannung U1. Erfahrungsgemäß ist zu einem bestimmten Zeitpunkt immer nur der Betrieb eines der beiden elektrischen Verbraucher 16, 18 erforderlich. Die Frontscheibenheizung wird gewöhnlich nur bei Temperaturen < 0 ° C betrieben, während ein Betrieb des Kühlerlüftermotors mit hoher Drehzahl nur bei Temperaturen > 0 ° C erforderlich ist.

Die Frontscheibenheizung 16 benötigt zu ihrem Betrieb eine Spannung U2 einer ersten Amplitude, während die Amplitude der Spannung U2 zum Betrieb des Kühlerlüftermotors 18 von der Kühlwassertemperatur abhängt, d.h. je heißer das Kühlwasser desto höher die Amplitude der Spannung U2, je höher die Amplitude der Spannung U2 desto höher die Drehzahl des Kühlerlüfters, und je höher die Drehzahl des Kühlerlüfters desto höher die Kühlwirkung. Würde die Ausgangsspannung U2, die zum Betrieb der Frontscheibenheizung benötigt wird, mit gleicher Amplitude an den Kühlerlüftermotor 18 gekoppelt, so wäre der Kühlerlüftermotor 18 nur mit einer Drehzahl, und zwar der Maximaldrehzahl, betreibbar. Dies ist unerwünscht.

Deshalb weist der DC/DC-Wandler 10 mindestens einen Steuereingang 20 auf, über den die am Ausgang des DC/DC-Wandlers 10 bereitgestellte Spannung hinsichtlich ihrer Amplitude variiert werden kann. Das über den Steuereingang 20 zugeführte Steuersignal kann vom einem Verbraucher selbst oder von einem Motorsteuergerät, an dem Informationen zu betriebsrelevanten Daten der Verbraucher abgelegt sowie deren aktueller bzw. ein demnächst stattfindender Ein-/Ausschaltvorgang abfragbar sind, erzeugt werden.

Über einen Steuereingang 22 kann dem DC/DC-Wandler 10 ein Steuersignal zugeführt werden, das den Auslastungsgrad eines als Gleichstromquelle 12 dienenden Drehstromgenerators berücksichtigt. Das über den Steuereingang 22 zugeführte Steuersignal kann ebenfalls vom Motorsteuergerät erzeugt werden und bewirkt eine Absenkung der Ausgangsspannung U2 des DC/DC-Wandlers 10 bei Registrieren eines kritischen Auslastungsgrads des Drehstromgenerators.

Generell kann die Amplitude der Spannung U2 kleiner oder größer sein als die Spannung U1. Beispielsweise zum Betrieb eines Kühlerlüftermotors 18 bei sehr niedriger Drehzahl ist dieser mit einer Spannung zu versorgen, die gewöhnlich unter der von der Fahrzeugbatterie bzw. dem Drehstromgenerator des Kraftfahrzeugs gelieferten Spannung liegt.

Erfindungsgemäß kann auch vorgesehen werden, an die Auswählvorrichtung 14 mehrere Verbraucher anzuschließen, deren Betrieb zwar gleichzeitig in Betracht kommt, die jedoch aufgrund ihrer unterschiedlichen Priorität nicht immer gleichzeitig betrieben werden müssen. Beispielsweise kann es sich dann bei dem Verbraucher 16 um einen Konsumverbraucher handeln, beispielsweise die Klimaanlage, während es sich bei dem Verbraucher 18 um einen sicherheitsrelevanten Verbraucher, beispielsweise das AntiBlockiersystem, handeln kann. Die Auswählvorrichtung 14 kann hierbei so gesteuert werden, dass, solange der elektrische Verbraucher 18 keinen Strom benötigt, der elektrische Verbraucher 16 mit Strom versorgt wird. Sobald jedoch der Verbraucher 18 mit Strom versorgt werden muss, wird der Verbraucher 16 mittels der Auswählvorrichtung 14 von der Ausgangsseite des DC/DC-Wandlers 10 abgetrennt.

Neben dem im ersten Ausführungsbeispiel erwähnten Umschalten zwischen Kühlerlüftermotor und Frontscheibenheizung kommen insbesondere auch ein Umschalten der Erregerwicklung des Drehstromgenerators bzw. der elektrischen Heizung eines Kraftfahrzeugs in Betracht. Weitere Anwendungsfälle sind für den Fachmann offensichtlich.

Von der erfindungsgemäßen Idee ist mitumfasst, dieses Prinzip auf Verbrauchergruppen bzw. mehrere Verbraucher anzuwenden.

## Patentansprüche

1. Vorrichtung zur Spannungsversorgung in einem Kraftfahrzeug umfassend einen DC/DC-Wandler (10) mit einem Eingang, der mit einer Gleichspannungsquelle (12) verbindbar ist, und einem Ausgang, an dem eine Spannung vorbestimmter Amplitude bereitstellbar ist, wobei die Vorrichtung eine Auswählvorrichtung (14) umfasst, mit der eine Teilmenge (16; 18) einer Menge N von Verbrauchern (16, 18) an den Ausgang des DC/DC-Wandlers (10) ankoppelbar ist, wobei der DC/DC-Wandler (10) am Ausgang einen maximalen Strom abgeben kann und der Gesamtstrom, der von der angekoppelten Teilmenge (16; 18) von Verbrauchern (16, 18) benötigt wird, kleiner oder gleich dem maximalen Strom ist, **dadurch gekennzeichnet, dass** die Teilmenge mindestens einen ersten Verbraucher (16; 18) und die Restmenge der Verbraucher mindestens einen zweiten Verbraucher (18; 16) umfasst, derart, dass ein gleichzeitiger Betrieb des mindestens einen ersten Verbrauchers (16; 18) und des mindestens einen zweiten Verbrauchers (18; 16) aufgrund ihrer verbraucherspezifischen Eigenschaften nie erforderlich ist, und der DC/DC-Wandler (10) hinsichtlich des von ihm abgebbaren maximalen Stroms so dimensioniert ist, dass der maximale Strom kleiner ist als die Summe des Strombedarfs des mindestens einen ersten und des mindestens einen zweiten Verbrauchers (16, 18).

2. Vorrichtung nach Anspruch 1, **dadurch gekennzeichnet, dass** der DC/DC-Wandler (10) eine Variation der an seinem Ausgang bereistellbaren Spannung ermöglicht.

3. Vorrichtung nach Anspruch 2, **dadurch gekennzeichnet, dass** der DC/DC-Wandler (10) mindestens einen Steuereingang aufweist, über den das Wandlungsverhältnis des DC/DC-Wandlers einstellbar ist.

4. Vorrichtung nach Anspruch 3, **dadurch gekennzeichnet, dass** das Wandlungsverhältnis des DC/DC-Wandlers (10) von einem an seinem Ausgang angekoppelbaren, insbesondere angekoppelten Verbraucher (16; 18) steuerbar ist.

5. Vorrichtung nach Anspruch 3 oder 4, **dadurch gekennzeichnet, dass** die Gleichspannungsquelle (12) der Drehstromgenerator eines Kraftfahrzeugs ist und das Wandlungsverhältnis des DC/DC-Wandlers (10) von einem Motorsteuergerät, insbesondere unter Berücksichtigung des Auslastungsgrads des Drehstromgenerators steuerbar ist.

6. Vorrichtung nach einem der Ansprüche 1 bis 5, **dadurch gekennzeichnet, dass** die am Ausgang des DC/DC-Wandlers (10) bereitgestellte Spannung größer ist als die Spannung am Eingang des DC/DC-Wandlers (10).

7. Vorrichtung nach einem der Ansprüche 1 bis 5, **dadurch gekennzeichnet, dass** die am Ausgang des DC/DC-Wandlers (10) bereitgestellte Spannung kleiner ist als die Spannung am Eingang des DC/DC-Wandlers (10).

8. Vorrichtung nach einem der vorhergehenden Ansprüche, **dadurch gekennzeichnet, dass** der mindestens eine erste Verbraucher (16; 18) und der mindestens eine zweite Verbraucher (18; 16) unterschiedliche Priorität bei der Ankopplung an den Ausgang des DC/DC-Wandlers (10) aufweisen.

9. Vorrichtung nach Anspruch 8, **dadurch gekennzeichnet, dass** der Verbraucher mit der niedrigeren Priorität ein Konsumverbraucher, der Verbraucher mit der höheren Priorität ein sicherheitsrelevanter Verbraucher ist.

10. Vorrichtung nach einem der vorhergehenden Ansprüche, **dadurch gekennzeichnet, dass** der mindestens eine erste Verbraucher (16; 18) erfahrungsgemäß in einem ersten Temperaturbereich und der mindestens eine zweite Verbraucher (18; 16) erfahrungsgemäß in einem zweiten Temperaturbereich mit Spannung versorgt werden müssen, wobei sich der erste und der zweite Temperaturbereich nicht überlappen.

11. Vorrichtung nach einem der vorhergehenden Ansprüche, **dadurch gekennzeichnet, dass** die Menge N zwei Verbraucher (16, 18) und die Teilmenge einen Verbraucher (16; 18) umfassen.

12. Vorrichtung nach einem der vorhergehenden Ansprüche, **dadurch gekennzeichnet, dass** ein Verbraucher (16, 18) die Frontscheibenheizung eines Kraftfahrzeugs ist.

13. Vorrichtung nach einem der vorhergehenden Ansprüche, **dadurch gekennzeichnet, dass** ein Verbraucher (16, 18) der Kühlerlüftermotor eines Kraftfahrzeugs ist.

14. Vorrichtung nach einem der vorhergehenden Ansprüche, **dadurch gekennzeichnet, dass** ein Verbraucher (16, 18) eine elektrische Heizung eines Kraftfahrzeugs ist.

15. Vorrichtung nach einem der vorhergehenden Ansprüche, **dadurch gekennzeichnet, dass** ein Verbraucher (16, 18) die Erregerwicklung des Drehstromgenerators (12) eines Kraftfahrzeugs ist.

## Claims

1. Device for supply of electricity in a motor vehicle comprising a DC/DC converter (10) with an input which is connectible to a direct current source (12) and an output where a voltage of predetermined amplitude is made available, and the device includes a selecting device (14) by means of which a portion (16; 18) of a quantity N of consumers (16, 18) is connected to the output of the DC/DC converter (10), and the DC/DC converter (10) can deliver a maximum current at the output, and the total current as required by the connected portion (16; 18) of consumers (16, 18) is less or equal the maximum current, **characterised in that** the portion includes at least a first consumer (16; 18), and the remainder of consumers includes at least one second consumer (18; 16) in such a manner that simultaneous operation of the at least one first consumer (16; 18) and the at least one second consumer (18; 16) is never required due to its consumer-specific properties, and the DC/DC converter (10) is with respect to the maximum current to be output by it, dimensioned so that the maximum current is less than the sum of current requirements of the at least one first and the at least one second consumer (16, 18).

2. Device according to Claim 1, **characterised in that** the DC/DC converter (10) permits a variation of voltage made available at its output.

3. Device according to Claim 2, **characterised in that** the DC/DC converter (10) comprises at least one control input by means of which the conversion ratio of the DC/DC converter is set.

4. Device according to Claim 3, **characterised in that** the conversion ratio of the DC/DC converter (10) is controlled by a consumer (16; 18) which is connectible to its output, in particular a connected consumer (16; 18).

5. Device according to Claim 3 or 4, **characterised in that** the direct voltage source (12) is the three-phase generator of a motor vehicle, and the conversion ratio of the DC/DC converter (10) is controlled by a motor control device, in particular taking into consideration the full capacity of the three-phase generator.

6. Device according to one of Claims 1 to 5, **characterised in that** voltage made available at the output of the DC/DC converter (10) is higher than the voltage at the input of the DC/DC converter (10).

7. Device according to one of Claims 1 to 5, **characterised in that** the voltage made available at the output of the DC/DC converter (10) is lower than the voltage at the input of the DC/DC converter (10).

8. Device according to one of the above claims, **characterised in that** the at least one first consumer (16; 18) and the at least one second consumer (18; 16) have different priorities when connecting to the output of the DC/DC converter (10).

9. Device according to Claim 8, **characterised in that** the consumer with the lower priority is a consumer, and the consumer with the higher priority is a safety relevant consumer.

10. Device according to one of the above claims, **characterised in that** experience has shown that the at least one first consumer (16; 18) must be supplied with voltage in a first temperature range, and the at least one second consumer (18; 16), as experience has shown, in a second temperature range, and the first and the second temperature range do not overlap.

11. Device according to one of the above claims, **characterised in that** volume N includes two consumers (16, 18), and the portion includes one consumer (16; 18).

12. Device according to one of the above claims, **characterised in that** a consumer (16, 18) is the windscreen heater of a motor vehicle.

13. Device according to one of the above claims, **characterised in that** a consumer (16, 18) is the cooling ventilator motor of a motor vehicle.

14. Device according to one of the above claims, **characterised in that** a consumer (16, 18) is an electric heater of a motor vehicle.

15. Device according to one of the above claims, **characterised in that** a consumer (16, 18) is the exciter winding of the three-phase generator (12) of a motor vehicle.

## Revendications

1. Dispositif d'alimentation en courant dans un véhicule automobile comprenant un convertisseur CC/CC (10) avec une entrée, qui peut être reliée à une source de tension continue (12) et une sortie sur laquelle une tension d'amplitude prédéterminée peut être mise à disposition, le dispositif comprenant un dispositif de sélection (14) avec lequel une quantité partielle (16 ; 18) d'une quantité N d'utilisateurs (16, 18) peut être couplée à la sortie du convertisseur CC/CC (10), le convertisseur CC/CC (10) pouvant transmettre à la sortie un courant maximal et l'ensemble du courant, qui est utilisé à partir de la quantité partielle couplée (16 ; 18) par des utilisateurs (16, 18), étant inférieur ou égal au courant maximal, **caractérisé en ce que** la quantité partielle comprend au moins un premier utilisateur (16 ; 18) et la quantité restante des utilisateurs au moins un deuxième utilisateur (18 ; 16), de telle manière qu'un fonctionnement simultané d'au moins un premier utilisateur (16 ; 18) et d'au moins un deuxième utilisateur (18 ; 16) n'est jamais obligatoire en raison des propriétés spécifiques à l'utilisateur et le convertisseur CC/CC (10) en ce qui concerne le courant maximal qu'il transmet, est dimensionné de telle manière que le courant maximal est inférieur à la somme des besoins en courant d'au moins un premier et d'au moins un deuxième utilisateur (16, 18).

2. Dispositif selon la revendication 1, **caractérisé en ce que** le convertisseur CC/CC (10) permet une variation de la tension pouvant être mise à disposition à sa sortie.

3. Dispositif selon la revendication 2, **caractérisé en ce que** le convertisseur CC/CC (10) comporte au moins une entrée de commande, qui permet de régler le rapport de conversion du convertisseur CC/CC.

4. Dispositif selon la revendication 3, **caractérisé en ce que** le rapport de conversion du convertisseur CC/CC (10) peut être commandé par un utilisateur (16 ; 18) pouvant être couplé, en particulier couplé, à sa sortie.

5. Dispositif selon la revendication 3 ou 4, **caractérisé en ce que** la source de tension continue (12) est le générateur à courant triphasé d'un véhicule automobile et le rapport de conversion du convertisseur CC/CC (10) peut être commandé par un appareil de commande du moteur, en particulier compte tenu du pourcentage d'utilisation du générateur à courant triphasé.

6. Dispositif selon l'une des revendications 1 à 5, **caractérisé en ce que** la tension mise à disposition à la sortie du convertisseur CC/CC (10) est supérieure à la tension à l'entrée du convertisseur CC/CC (10).

7. Dispositif selon l'une des revendications 1 à 5, **caractérisé en ce que** la tension mise à disposition à la sortie du convertisseur CC/CC (10) est inférieure à la tension à l'entrée du convertisseur CC/CC (10).

8. Dispositif selon l'une des revendications précédentes, **caractérisé en ce qu'**au moins un premier utilisateur (16 ; 18) et au moins un deuxième utilisateur (18 ; 16) présentent une priorité différente lors du couplage à la sortie du convertisseur CC/CC (10).

9. Dispositif selon la revendication 8, **caractérisé en ce que** l'utilisateur avec la priorité plus basse est un consommateur, l'utilisateur avec la priorité plus haute est un utilisateur relatif à la sécurité.

10. Dispositif selon l'une des revendications précédentes, **caractérisé en ce qu'**au moins un premier utilisateur (16 ; 18) par expérience dans une première gamme de températures et qu'au moins un deuxième utilisateur (18 ; 16) par expérience dans une deuxième gamme de températures, doivent être alimentés en tension, sachant que la première gamme et la deuxième gamme de températures ne se chevauchent pas.

11. Dispositif selon l'une des revendications précédentes, **caractérisé en ce que** la quantité N comprend deux utilisateurs (16 ; 18) et la quantité partielle comprend un utilisateur (16 ; 18).

12. Dispositif selon l'une des revendications précédentes, **caractérisé en ce qu'**un utilisateur (16 ; 18) est le chauffage du pare-brise d'un véhicule automobile.

13. Dispositif selon l'une des revendications précédentes, **caractérisé en ce qu'**un utilisateur (16 ; 18) est le moteur du refroidisseur par air d'un véhicule automobile.

14. Dispositif selon l'une des revendications précédentes, **caractérisé en ce qu'**un utilisateur (16 ; 18) est un chauffage électrique d'un véhicule automobile.

15. Dispositif selon l'une des revendications précédentes, **caractérisé en ce qu'**un utilisateur (16 ; 18) est la bobine d'excitation du générateur à courant triphasé d'un véhicule automobile.
